# EUROPEAN PATENT SPECIFICATION

(11) **EP 4 233 539 B1**
(45) Date of publication and mention of the grant of the patent: **30.07.2025**
(21) Application number: 23155209.2
(22) Date of filing: 06.02.2023
(51) Int. Cl.: A01K 85/01, A01K 85/00, C03C 12/02, C03C 17/00

(54) **FISHING WORM**
ANGELRUTE
VIS SANS FIN DE PÊCHE

(30) Priority: 25.02.2022 JP 2022028280
(43) Date of publication of application: 30.08.2023
(73) Proprietor: Globeride, Inc., Higashikurume-shi Tokyo 203-8511 (JP)
(72) Inventor: YAGI, Hiroshi, Tokyo, 203-8511 (JP)
(74) Representative: Boult Wade Tennant LLP

(56) References cited:
- JP-B2- 3 738 105
- US-A- 4 293 189
- US-A- 4 862 631
- US-A1- 2006 096 155

## Description

### BACKGROUND OF THE INVENTION

### 1. TECHNICAL FIELD

The present invention relates to a fishing worm.

### 2. DESCRIPTION OF THE RELATED ART

In the related art, artificial baits (lures and worms), or baits mimicking small fish, are used in fishing to catch fish eaters. There are various types of known artificial baits such as Egi lures, spoons, plugs, spinners, jigs, and plastic lures.

As an example of artificial baits, JP H11-75628 A discloses a fish attracting tool such as an artificial bait used in fishing. Particularly, in this fish attracting tool, an object that reflects light rays (a reflector) is sealed together with a liquid in a tool body, and the reflector generates complexly reflected light by making a movement, thereby increasing fishing results.

In addition, JP H9-154438 A discloses a color-developing lure in which a pair of halved lure members including a transparent or translucent material is bonded at an interval so that the lure has a hollow interior portion. Each halved lure member has an inner surface provided with a diffusely reflecting layer having a large number of irregularities, a front surface of the diffusely reflecting layer is provided with a reflecting film, and the lure has an outer surface provided with a smooth layer.

US2006/096155 A1 relates to a reflective fishing lure incorporating a plurality of ultra-reflective beads.

### RELEVANT REFERENCES

### LIST OF RELEVANT PATENT LITERATURE

Patent Literature 1: Japanese Application Publication No. H11-75628
Patent Literature 2: Japanese Application Publication No. H9-154438

### SUMMARY OF THE INVENTION

Although a fish attracting tool as in JP H11-75628 A reflects light, the reflected light is weak or does not even reach a fish eater depending on angles of light shined on a small piece of the tool from the outside, and the fish attracting tool does not necessarily enhance the fish attracting effect. This is a problem that remains to be solved. Even a color-developing lure as in JP H9-154438 A merely causes diffusely reflected light. Since the reflected light is diffused, the light is not strong. For that reason, the lure is hard for fish eaters to notice and does not necessarily enhance the fish attracting effect.

An object of an embodiment of the invention is to provide a worm capable of attracting fish eaters more reliably and strongly with an easy formation technique at low cost by reducing attenuation in reflection of external light to cause light reflected in multi directions at higher luminance. Other objects of the embodiment of the invention will be clearly understood by referring to the entirety thereof.

A worm for fishing according to an embodiment of the invention is a solid worm for fishing having an interior portion partially or completely visible from outside, the solid worm comprising at least one high refractive index glass bead and/or at least one specular bead (at least one of "one or more high refractive index glass beads" and "one or more specular beads") capable of reflecting external light and embedded in the solid worm, the at least one high refractive index glass bead and/or the at least one specular bead is disposed in a front surface of a sheet member embedded in the solid worm.

In the fishing worm according to an embodiment of the invention, the at least one high refractive index glass bead and/or the at least one specular bead is disposed in the front surface and a back surface of the sheet member embedded in the solid worm. Furthermore, in the fishing worm according to an embodiment of the invention, the sheet member is capable of reflecting external light.

In the fishing worm according to an embodiment of the invention, the high refractive index glass bead is a spherical reflective bead having a refractive index of from 1.4 to 2.6.

In the fishing worm according to an embodiment of the invention, the specular bead has a tetrahedral, hexahedral, octahedral, dodecahedral, or icosahedral shape.

In the fishing worm according to an embodiment of the invention, the high refractive index glass bead is formed by soda lime glass, Vycor glass, quartz glass, Pyrex (registered trademark) glass, borosilicate glass, or titanium barium glass.

In the fishing worm according to an embodiment of the invention, the specular bead is formed by soda lime glass, Vycor glass, quartz glass, Pyrex (registered trademark) glass, borosilicate glass, titanium barium glass, ABS resin, or acrylic resin.

A fishing worm according to an example is a worm for fishing, the worm being a solid worm, the solid worm comprising an inner layer and an outer layer, the solid worm having an interior portion partially or completely visible from outside and comprising at least one high refractive index glass bead and/or at least one specular bead (at least one of "one or more high refractive index glass beads" and "one or more specular beads") capable of reflecting external light and embedded in the inner layer or in the outer layer or partially exposed on a surface of the outer layer, or the solid worm having an outer surface to which a coating material containing the at least one high refractive index glass bead and/or the at least one specular bead is applied, and the at least one high refractive index glass bead and/or the at least one specular bead being configured to reflect the external light.

According to various embodiments of the invention, there is provided a worm capable of attracting fish eaters more reliably and strongly with an easy formation technique at low cost by reducing attenuation in reflection of external light from a plurality of parts of the worm to cause light reflected in multi directions at higher luminance.

### BRIEF DESCRIPTION OF THE DRAWINGS

FIG. 1A is a front view of a fishing worm according to an embodiment of the invention; FIG. 1B is a cross-sectional view of the fishing worm according to the embodiment of the invention;
FIG. 2A is a front view of a fishing worm according to an embodiment useful for understanding the invention; FIG. 2B is a cross-sectional view of the fishing worm according to the embodiment of the invention;
FIG. 3A is a front view of a fishing worm according to an embodiment useful for understanding the invention; FIG. 3B is a cross-sectional view of the fishing worm according to the embodiment of the invention;
FIG. 4A is a side view of a fishing worm according to an embodiment of the invention; FIG. 4B is a top view of the fishing worm according to the embodiment of the invention;
FIG. 5A is a front view of a fishing worm according to an embodiment useful for understanding the invention; FIG. 5B is a cross-sectional view of the fishing worm according to the embodiment of the invention;
FIG. 6A is a front view of a fishing worm according to an embodiment useful for understanding the invention; FIG. 6B is a cross-sectional view of the fishing worm according to the embodiment of the invention;
FIG. 7A is a front view of a fishing worm according to an embodiment useful for understanding the invention; FIG. 7B is a cross-sectional view of the fishing worm according to the embodiment of the invention;
FIG. 8A is a front view of a fishing worm according to an embodiment useful for understanding the invention; FIG. 8B is a cross-sectional view of the fishing worm according to the embodiment of the invention; and
FIG. 9 is a view for describing an aspect of reflection of a high refractive index glass bead in a fishing worm according to an embodiment of the invention.

### DETAILED DESCRIPTION

Hereinafter, various embodiments of the present invention will be described with reference to the drawings as appropriate. Note that common components in the drawings are denoted by the same reference numerals.

A fishing worm according to an embodiment of the invention is a solid worm for fishing having an interior portion partially or completely visible from outside. The solid worm comprises at least one high refractive index glass bead and/or at least one specular bead (at least one of "one or more high refractive index glass beads" and "one or more specular beads") capable of reflecting external light and embedded in the solid worm or partially exposed on a surface of the solid worm. Alternatively, in examples useful for understanding the invention, the solid worm has an outer surface to which a coating material containing the at least one high refractive index glass bead and/or the at least one specular bead is applied. The external light is reflected by the high refractive index glass bead and/or the specular bead.

According to various embodiments of the invention, there is provided a worm capable of attracting fish eaters more reliably and strongly with an easy formation technique at low cost by reducing attenuation in reflection of external light from a plurality of parts of the worm to cause light reflected in multi directions at higher luminance.

Hereinafter described is the fishing worm according to an embodiment of the invention. Although details will be described later, in the claimed invention where at least one high refractive index glass bead and/or at least one specular bead (at least one of "one or more high refractive index glass beads" and "one or more specular beads") is embedded in the solid worm, at least one high refractive index glass bead and/or at least one specular bead is disposed in a front surface of a reflecting sheet member embedded in the solid worm. Such a configuration enables wide-ranging reflection combined with the reflection from the bead without inhibiting the flexibility of the worm.

In the fishing worm according to an embodiment of the invention, at least one high refractive index glass bead and/or at least one specular bead (at least one of "one or more high refractive index glass beads" and "one or more specular beads") is disposed in the front surface and a back surface of the reflecting sheet member embedded in the solid worm. Such a configuration enables wide-ranging and multidirectional reflection combined with the reflection from the bead without inhibiting the flexibility of the worm.

In the fishing worm according to an embodiment of the invention, the sheet member is capable of reflecting external light. The sheet member is formed by, but not limited to, a metal foil such as aluminum foil, a PET film, or a hologram sheet. The sheet member employs a material having a thickness that does not inhibit the bendability of the worm. Such a configuration enables wide-ranging and multidirectional reflection combined with the reflection from the bead without inhibiting the flexibility of the worm.

In the fishing worm according to an embodiment of the invention, the high refractive index glass bead is a spherical reflective bead having a refractive index of from 1.4 to 2.6 (the range includes 1.4 and 2.6, which is standardized throughout this specification). The high refractive index glass bead herein is a spherical bead (for example, spherical glass bead) or minute high refractive index bead employed as a spherical lens. The high refractive index glass bead is a perfect sphere and acts as a kind of convex lens. External light incident on the bead is refracted by an interface of the bead and is focused on one point, reflected by the bottom of the sphere, refracted again on the interface through the sphere, and sent out (that is, the high refractive index glass bead refracts externally incident light twice and reflects once, and then, sends the light out). In the fishing worm according to an embodiment of the invention, the high refractive index glass bead is formed by soda lime glass, Vycor glass, quartz glass, Pyrex (registered trademark) glass, borosilicate glass, or titanium barium glass. For example, the high refractive index glass bead is formed by, but not limited to, abrasion of waste glass with a hard abrasive or abrasive liquid. Having a refractive index of from 1.4 to 2.6, the high refractive index glass bead which is a spherical reflective bead causes strong reflected light including retroreflected light.

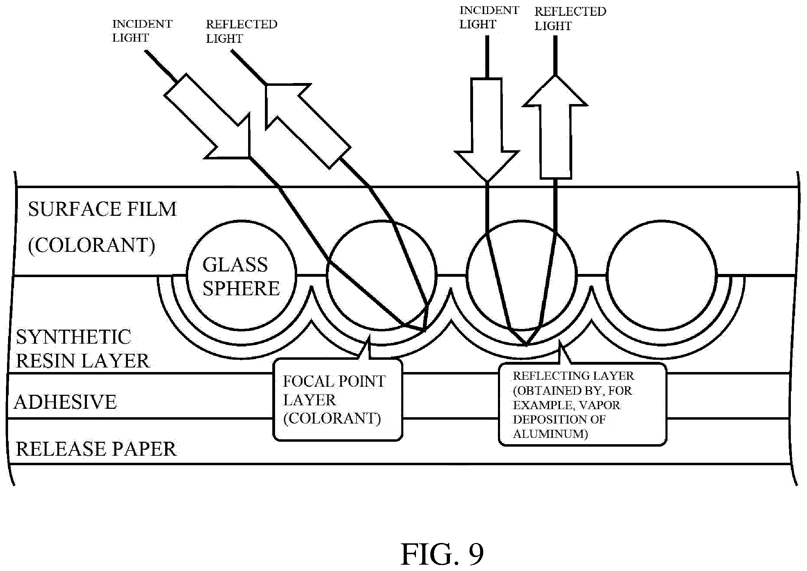

To enhance the reflection in the high refractive index glass bead, as shown in FIG. 9, a focal point (a focal point layer in an example illustrated in the drawing) includes a reflecting layer such as a metal (a reflecting layer obtained by vapor deposition of aluminum in the illustrated example). Such a configuration sends stronger light outside the high refractive index glass bead. In this manner, utilizing the behavior of the spherical lens, that is, a difference in refractive index between glass (or plastic or the like) and air, the high refractive index glass bead (such as a spherical glass bead) refracts external light and allows the light to converge, and then, reflects the light by the inside of an outer surface of the bead or by the reflecting layer (obtained by vapor deposition of aluminum, painting, or a reflecting sheet material) disposed on the back surface of the outer surface for enhancing reflection efficiency, thereby sending the light out. A focal length is determined by the refractive index of a material included in the spherical lens (with a focal point layer, a focal length is determined by the refractive index of this medium) which has a refractive index within a range of n = 1.4 to 2.6. Note that a surface film, a synthetic resin layer, an adhesive, and a release paper shown in FIG. 9 are illustrated for convenience sake in describing the configuration of the reflecting layer and are not necessarily essential.

Furthermore, in the fishing worm according to an embodiment of the invention, the specular bead is a polyhedral bead having a tetrahedral, hexahedral, octahedral, dodecahedral, or icosahedral shape (including a regular tetrahedral, regular hexahedral, regular octahedral, regular dodecahedral, or regular icosahedral shape). In a case where the polyhedral bead includes a non-transparent material or a transparent material, externally incident light enters the bead surface or the interior portion of the bead and is reflected once or twice and sent out with high intensity. The specular bead is formed by, but not limited to, injection molding using glass materials such as soda lime glass, Vycor glass, quartz glass, Pyrex (registered trademark) glass, borosilicate glass, and titanium barium glass or resin such as ABS resin and acrylic resin.

Herein, the term "specular reflection" is defined as "reflection that obeys the law of reflection (that is, the angles of incidence and reflection are equal but opposite in sign)". Since specularly reflected light typically has higher luminance than diffusely reflected light, it is known that specular reflection of external light significantly increases the intensity of the reflected light, which results in long-distance transmission of the reflected light (the same applies hereinafter). Specular reflection and diffuse reflection vary in luminance with various conditions, but under the same condition, the luminance of diffuse reflection is approximately 1/5 or less of that of specular reflection. In the invention, note that "specular reflection" does not only include ideal specular reflection but also includes reflection having luminance equal to 40% or more of the luminance of ideal specular reflection (referred to as "quasi specular reflection" herein).

External light enters from various directions, and an example of the external light is primarily sunlight that reaches underwater from above the surface of water. Such external light (incident light) enters an underwater worm in an up and down (vertical) or oblique direction from above the surface of water. To attract a fish eater, it is desirable that the worm reflects light specularly roughly in a right and left (lateral) or oblique lateral direction of the worm. In this regard, the worm is designed to make a predetermined movement during actual fishing. In a case where the worm includes a specular bead that reflects light specularly, the specular bead may be disposed in appropriate positions, considering a possible movement of the worm (also referred to as a worm action) in advance, but the specular bead is not particularly limited in position and orientation. Note that a large number of specular beads enable multidirectional specular reflection and enhance reflection efficiency of incident light in an appropriate range (direction). However, it is noteworthy that even a worm with a single reflecting member efficiently reflects light in an appropriate range (direction) as long as the worm action is rolling.

In the fishing worm according to an embodiment of the invention, the high refractive index glass bead has a spherical shape and the specular bead has a tetrahedral, hexahedral, octahedral, dodecahedral, or icosahedral shape (including a regular tetrahedral, regular hexahedral, regular octahedral, regular dodecahedral, or regular icosahedral shape). In a case where a plurality of specular beads 4 is used, at least two of the above shapes may be employed. Furthermore, the specular bead may have a polyhedral shape, including mirror surfaces having two or more different shapes. For example, the specular bead may be a polyhedron including mirror surfaces having two or more different shapes of quadrangle, hexagon, octagon, dodecagon, and icosagon.

The fishing worm according to an embodiment of the invention is formed solid by resin (for example, flexible resin such as elastomer and PVC). Herein, the fishing worm according to an embodiment of the invention may be partially or completely solid or may have a cavity in a part.

An example of the worm herein includes one that partially comprises a material having flexibility such as a lure obtained by combing the body of a worm with Tenya for fishing octopus or a jig head. In this manner, appropriately providing a worm with at least one high refractive index glass bead and/or at least one specular bead configured to reflect light that enters an outer surface of the bead from many directions makes it possible to send reflected light reliably to a fish eater even when the worm is a jig, Tenya, or a spoon. Accordingly, it is possible to enhance the fish attracting effect significantly.

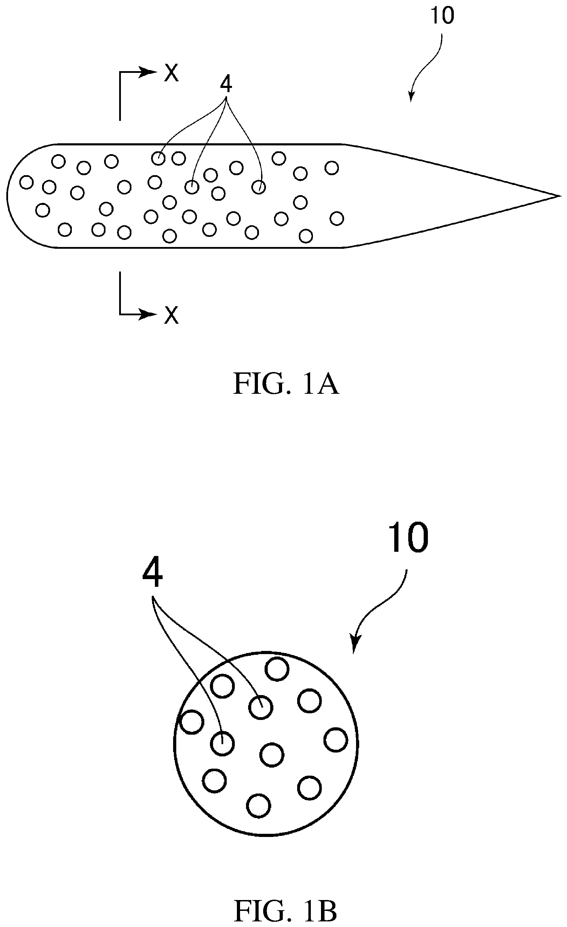

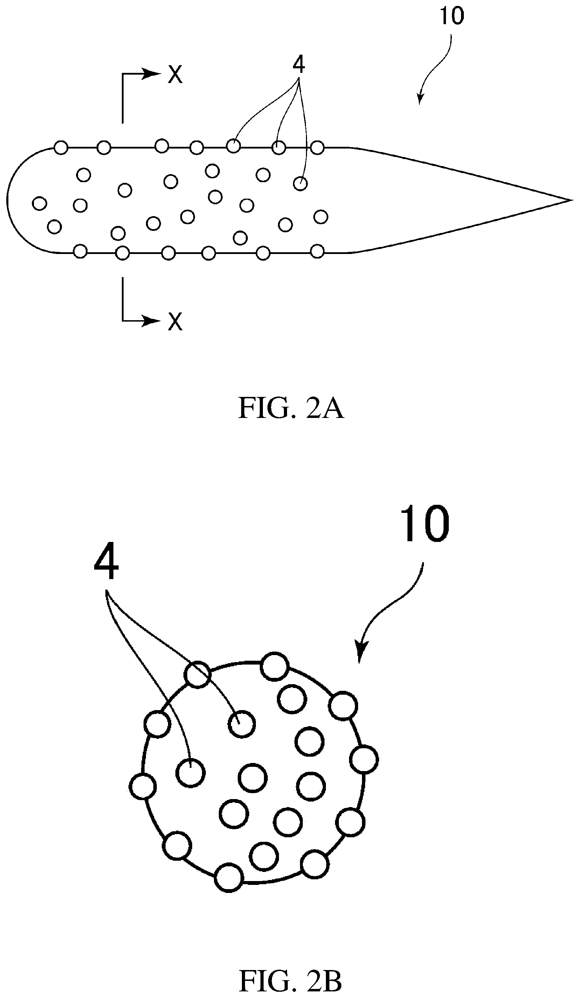

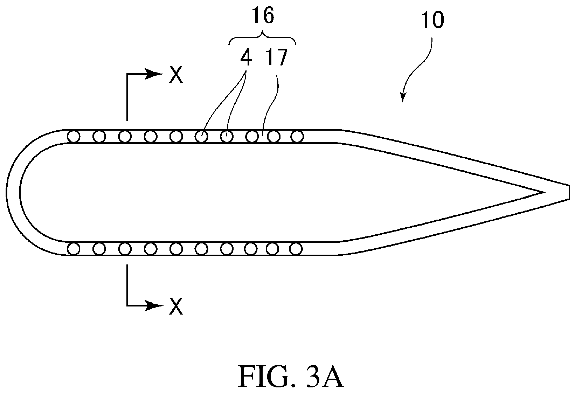

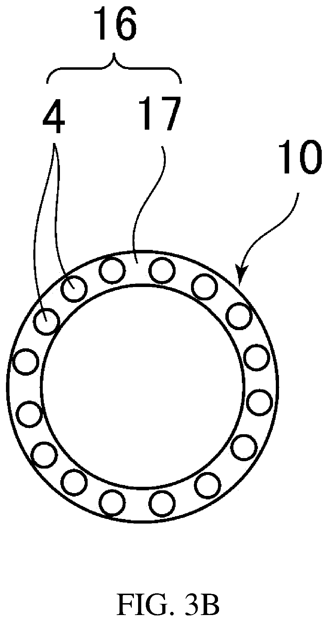

Next, a fishing worm 10 according to an embodiment useful for understanding the invention will be described with reference to FIGS. 1A to 3B. FIGS. 1B, 2B, and 3B are front views, and FIGS, 1A, 2A, and 3A are cross-sectional views (cross-sections taken along the line X-X). The fishing worm 10 according to an embodiment useful for understanding the invention is a solid fishing worm 10 having an interior portion partially or completely visible from outside. In an example shown in FIGS. 1A and 1B, at least one high refractive index glass bead and/or at least one specular bead capable of reflecting external light (hereinafter the reference numeral 4 is used for convenience sake, collectively representing at least one high refractive index glass bead and/or at least one specular bead (which is standardized throughout this specification)) is embedded in the solid worm 10. In an example shown in FIGS. 2A and 2B, at least one high refractive index glass bead and/or at least one specular bead is partially exposed on a surface of the solid worm 10. In an example shown in FIGS. 3A and 3B, a coating material 16 containing the at least one high refractive index glass bead and/or the at least one specular bead is applied to an outer surface of the solid worm 10. The external light is reflected by the high refractive index glass bead and/or the specular bead. In the drawings, the high refractive index glass bead or specular bead 4 is illustrated as a circular bead for convenience sake, but the drawings are not intended to determine nor to limit the shape of the bead (which is standardized throughout this specification). In a case where there is a plurality of high refractive index glass beads and/or a plurality of specular beads 4, at least one high refractive index glass bead and/or at least one specular bead 4 may be partially exposed on a surface of the solid worm 10 or a resin layer 17 of the coating material 16, and at least one of the rest of the high refractive index glass beads and/or the specular beads 4 may be embedded in the solid worm 10 or the resin layer 17 of the coating material 16. When the coating material 16 is employed, a urethane (clear) coating material or acrylic (clear) coating material may be employed not to inhibit the flexibility of the worm, but the coating material 16 is not limited thereto.

In this manner, it is possible to provide a worm capable of attracting fish eaters more reliably and strongly with an easy formation technique at low cost by reducing attenuation in reflection of external light from a plurality of parts of the worm to cause light reflected in multi directions at higher luminance. More specifically, without inhibiting the flexibility of the worm, it is possible to reliably reflect strong light in multi directions even when the light enters the bead at any angle of incident.

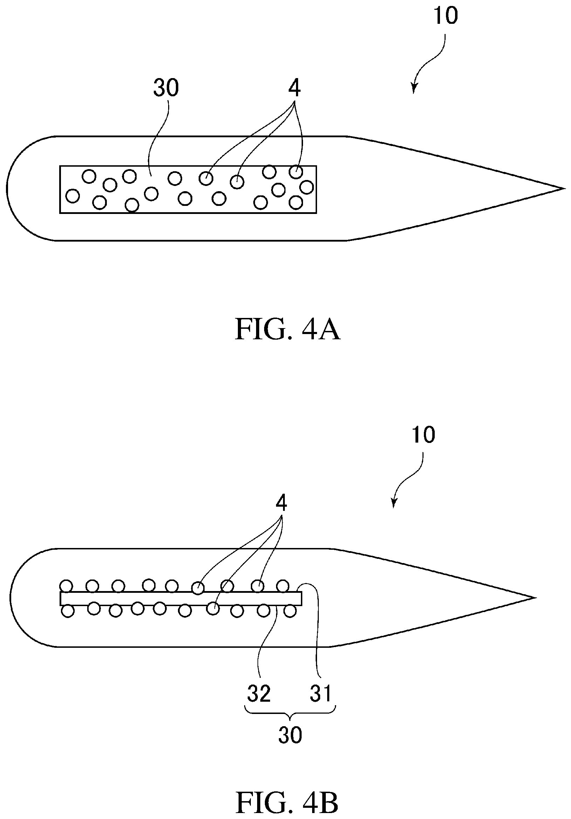

Next, a fishing worm 10 according to an embodiment of the invention will be described with reference to FIGS. 4A and 4B. FIG. 4A is a side view of a worm 10, and FIG. 4B is a top view of the worm 10. The fishing worm 10 according to an embodiment of the invention is formed solid, and the solid worm 10 has an interior portion partially or completely visible from outside. At least one high refractive index glass bead and/or at least one specular bead 4 capable of reflecting external light is disposed on a front surface of a sheet member 30 embedded in the solid worm 10. Such a configuration enables wide-ranging, multidirectional, and stronger reflection combined with the reflection from the bead without inhibiting the flexibility of the worm.

In the fishing worm 10 according to an embodiment of the invention, at least one high refractive index glass bead and/or at least one specular bead 4 is disposed on a front surface 31 and a back surface 32 of the sheet member 30 embedded in the solid worm 10. Such a configuration enables wide-ranging and multidirectional reflection combined with the reflection from the bead without inhibiting the flexibility of the worm.

In the fishing worm 10 according to an embodiment of the invention, the sheet member 30 itself is configured to reflect external light. The sheet member 30 is formed by, but not limited to, a metal foil such as aluminum foil, a PET film, or a hologram sheet. The sheet member employs a material having a thickness that does not inhibit the bendability of the worm. Such a configuration enables wide-ranging and multidirectional reflection combined with the reflection from the bead without inhibiting the flexibility of the worm. Note that the sheet member 30 may have rigidity to the extent that the sheet member 30 does not inhibit the flexibility of the entire worm, and the sheet member 30 may also be specularly reflective.

In this manner, disposing at least one high refractive index glass bead and/or at least one specular bead in a sheet member embedded in a solid worm makes it possible to reduce attenuation in reflection of external light from a plurality of parts of the worm to cause light reflected in multi directions at higher luminance, thereby providing a worm capable of attracting fish eaters more reliably and strongly with an easy formation technique at low cost. More specifically, without inhibiting the flexibility of the worm, it is possible to reliably reflect strong light in multi directions even when the light enters the bead at any angle of incident.

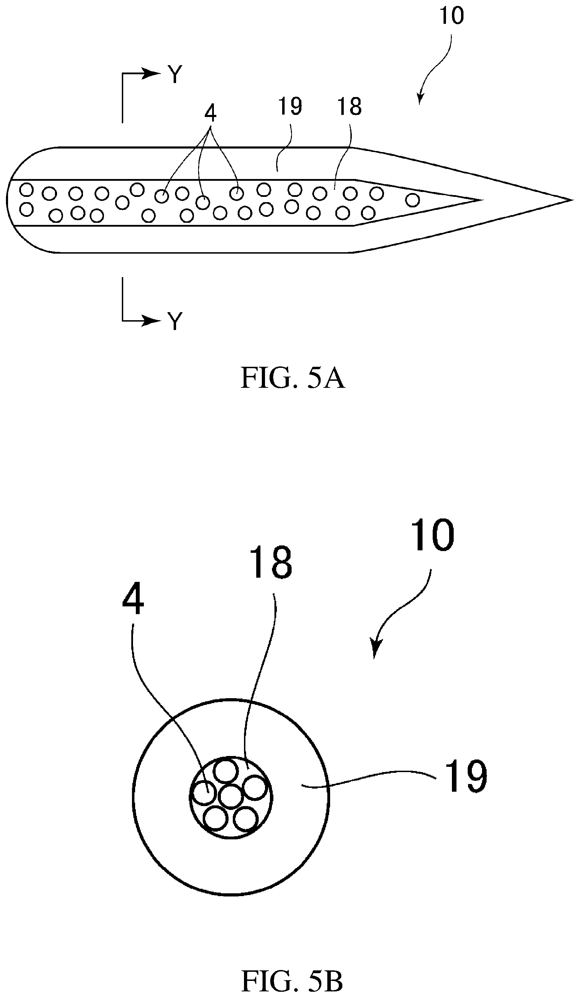

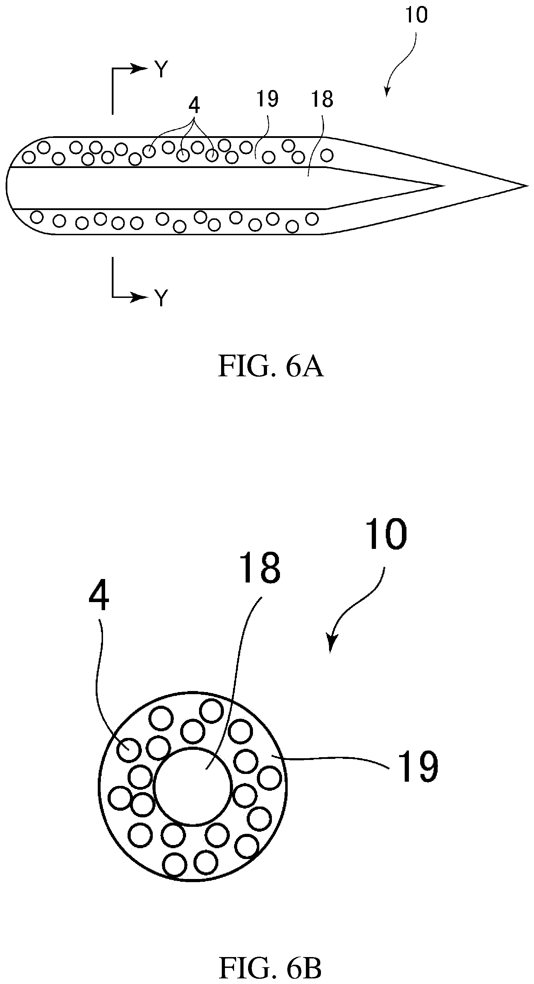

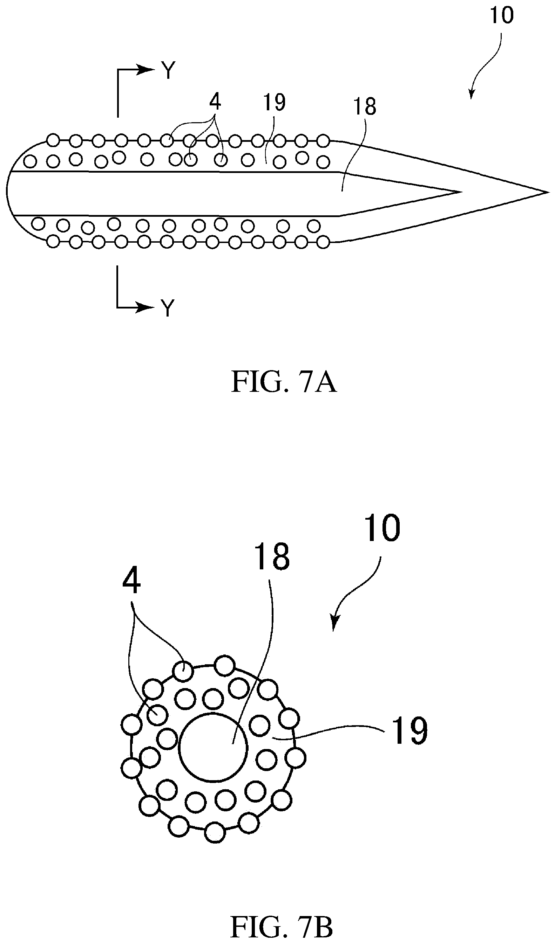

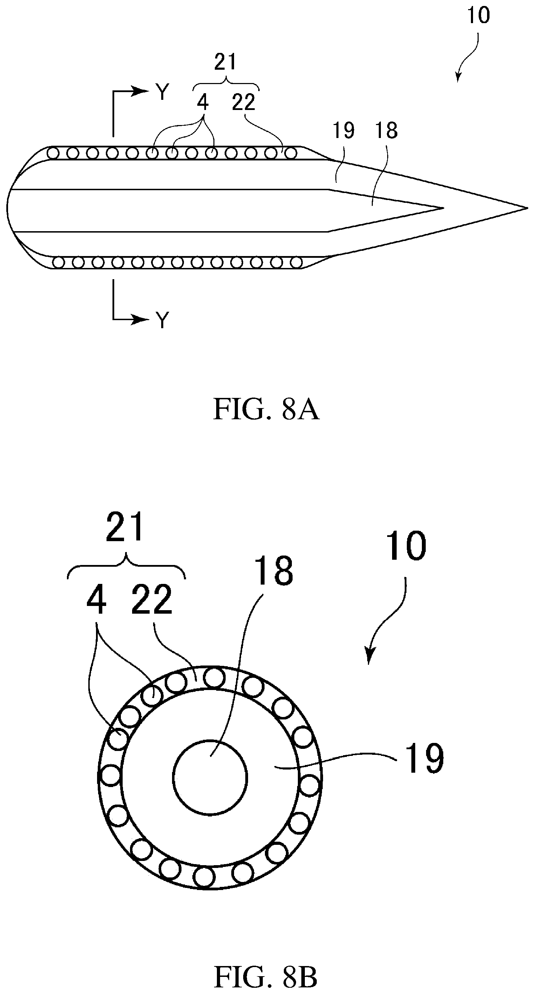

Next, a fishing worm 10 according to an example will be described with reference to FIGS. 5A to 8B. FIGS. 5B, 6B, 7B, and 8B are front views, and FIGS, 5A, 6A, 7A, and 8A are cross-sectional views (cross-sections taken along the line Y-Y). The fishing worm 10 according to an example is a solid fishing worm 10 formed by double molding or extrusion molding and comprising an inner layer 18 and an outer layer 19. In an example shown in FIG. 5, the solid worm 10 has an interior portion partially or completely visible from outside, and at least one high refractive index glass bead and/or at least one specular bead 4 capable of reflecting external light is embedded in the inner layer 18. In an example shown in FIG. 6, at least one high refractive index glass bead and/or at least one specular bead 4 is embedded in the outer layer 19. In an example shown in FIG. 7, at least one high refractive index glass bead and/or at least one specular bead 4 is partially exposed on a surface of the outer layer 19. In an example shown in FIG. 8, a coating material 21 containing at least one high refractive index glass bead and/or at least one specular bead 4 is applied to an outer surface of the solid worm 10 (an outer surface of the outer layer 19). The external light is reflected by the high refractive index glass bead and/or the specular bead 4.

In a case where there is a plurality of high refractive index glass beads and/or a plurality of specular beads 4, at least one high refractive index glass bead and/or at least one specular bead 4 is partially exposed on a surface of the outer layer 19 or a resin layer 22 of the coating material 21, and at least one of the rest of the high refractive index glass beads and/or the specular beads 4 may be embedded in the outer layer 19 or the resin layer 22 of the coating material 21. When the coating material 21 is employed, a urethane (clear) coating material or acrylic (clear) coating material may be employed not to inhibit the flexibility of the worm, but the coating material 21 is not limited thereto.

In this manner, it is possible to provide a worm capable of attracting fish eaters more reliably and strongly with an easy formation technique at low cost by reducing attenuation in reflection of external light from a plurality of parts of the worm to cause light reflected in multi directions at higher luminance. More specifically, without inhibiting the flexibility of the worm, it is possible to reliably reflect strong light in multi directions even when the light enters the bead at any angle of incident.

Dimensions, materials, and arrangements of the components described herein are not limited to those expressed in the embodiments and may be changed within the scope of the invention. A component that is not expressed herein may be added to the embodiments, and some of the components described in the embodiment may be omitted.

### REFERENCE SIGNS LIST

- 4: High refractive index glass beads or specular beads

- 10: Worm
- 17: Resin layer
- 18: Inner layer
- 19: Outer layer
- 21: Coating material
- 22: Resin layer
- 30: Sheet member
- 31: Front surface
- 32: Back surface

## Claims

1. A worm (10) for fishing, the worm (10) being a solid worm, the solid worm (10) having an interior portion partially or completely visible from outside, the solid worm (10) comprising at least one high refractive index glass bead (4) and/or at least one specular bead (4) configured to reflect external light and embedded in the solid worm,
wherein the at least one high refractive index glass bead (4) and/or the at least one specular bead (4) is disposed in a front surface (31) of a sheet member (30) embedded in the solid worm (10).

2. The worm (10) according to claim 1, wherein the at least one high refractive index glass bead (4) and/or the at least one specular bead (4) is disposed in the front surface (31) and a back surface (32) of the sheet member (30) embedded in the solid worm (10).

3. The worm (10) according to claim 1 or 2, wherein the sheet member (30) is capable of reflecting external light.

4. The worm (10) according to any one of claims 1 to 3, wherein the high refractive index glass bead (4) is a spherical reflective bead having a refractive index of from 1.4 to 2.6.

5. The worm (10) according to any one of claims 1 to 3, wherein the specular bead (4) has a tetrahedral, hexahedral, octahedral, dodecahedral, or icosahedral shape.

6. The worm (10) according to any one of claims 1 to 4, wherein the high refractive index glass bead (4) is formed by soda lime glass, quartz glass, borosilicate glass, or titanium barium glass.

7. The worm (10) according to any one of claims 1 to 3 or claim 5, wherein the specular bead (4) is formed by soda lime glass, quartz glass, borosilicate glass, titanium barium glass, ABS resin, or acrylic resin.

## Patentansprüche

1. Wurm (10) zum Fischen, wobei der Wurm (10) ein fester Wurm ist, wobei der feste Wurm (10) einen inneren Abschnitt aufweist, welcher teilweise oder vollständig von außen sichtbar ist, wobei der feste Wurm (10) wenigstens eine Glasperle (4) mit hohem Brechungsindex und/oder wenigstens eine spiegelnde Perle (4) umfasst, welche dazu eingerichtet ist/sind, äußeres Licht zu reflektieren und in dem festen Wurm eingebettet zu sein,
wobei die wenigstens eine Glasperle (4) mit hohem Brechungsindex und/oder die wenigstens eine spiegelnde Perle (4) in einer vorderen Fläche (31) eines Streifenelements (30) angeordnet ist, welches in dem festen Wurm (10) eingebettet ist.

2. Wurm (10) nach Anspruch 1, wobei die wenigstens eine Glasperle (4) mit hohem Brechungsindex und/oder die wenigstens eine spiegelnde Perle (4) in der vorderen Fläche (31) und einer hinteren Fläche (32) des Streifenelements (30) angeordnet ist, welches in dem festen Wurm (10) eingebettet ist.

3. Wurm (10) nach Anspruch 1 oder 2, wobei das Streifenelement (30) in der Lage ist, äußeres Licht zu reflektieren.

4. Wurm (10) nach einem der Ansprüche 1 bis 3, wobei die Glasperle (4) mit hohem Brechungsindex eine sphärische reflektierende Perle ist, welche einen Brechungsindex von 1,4 bis 2,6 aufweist.

5. Wurm (10) nach einem der Ansprüche 1 bis 3, wobei die spiegelnde Perle (4) eine tetraedrische, hexaedrische, oktaedrische, dodekaedrische oder ikosaedrische Form aufweist.

6. Wurm (10) nach einem der Ansprüche 1 bis 4, wobei die Glasperle (4) mit hohem Brechungsindex durch Natronkalkglas, Quarzglas, Borosilikatglas oder Titan-Barium-Glas gebildet ist.

7. Wurm (10) nach einem der Ansprüche 1 bis 3 oder Anspruch 5, wobei die spiegelnde Perle (4) durch Natronkalkglas, Quarzglas, Borosilikatglas, Titan-Barium-Glas, ABS-Harz oder Akrylharz gebildet ist.

## Revendications

1. Ver (10) pour la pêche, le ver (10) étant un ver solide, le ver (10) solide présentant une portion intérieure partiellement ou complètement visible de l'extérieur, le ver (10) solide comportant au moins une bille de verre (4) à indice de réfraction élevé et/ou au moins une bille spéculaire (4) configurée pour réfléchir la lumière extérieure et intégrée dans le ver solide,
dans lequel l'au moins une bille de verre (4) à indice de réfraction élevé et/ou l'au moins une bille spéculaire (4) est disposée dans une surface avant (31) d'un élément de feuille (30) intégré dans le ver (10) solide.

2. Ver (10) selon la revendication 1, dans lequel l'au moins une bille de verre (4) à indice de réfraction élevé et/ou l'au moins une bille spéculaire (4) est disposée dans la surface avant (31) et une surface arrière (32) de l'élément de feuille (30) intégrée dans le ver (10) solide.

3. Ver (10) selon la revendication 1 ou 2, dans lequel l'élément de feuille (30) est capable de réfléchir la lumière externe.

4. Ver (10) selon l'une quelconque des revendications 1 à 3, dans lequel la bille de verre (4) à indice de réfraction élevé est une bille réfléchissante sphérique présentant un indice de réfraction de 1,4 à 2,6.

5. Ver (10) selon l'une quelconque des revendications 1 à 3, dans lequel la bille spéculaire (4) présente une forme tétraédrique, hexaédrique, octaédrique, dodécaédrique ou icosaédrique.

6. Ver (10) selon l'une quelconque des revendications 1 à 4, dans lequel la bille de verre (4) à indice de réfraction élevé est formée par du verre sodocalcique, du verre de quartz, du verre borosilicaté ou du verre de baryum de titane.

7. Ver (10) selon l'une quelconque des revendications 1 à 3 ou 5, dans lequel la bille spéculaire (4) est formée par du verre sodocalcique, du verre de quartz, du verre borosilicaté, du verre de baryum de titane, de la résine ABS ou de la résine acrylique.
